# EUROPEAN PATENT APPLICATION

(11) **EP 2 722 719 A2**
(43) Date of publication of application: **23.04.2014**
(21) Application number: 12800502.2
(22) Date of filing: 14.06.2012
(51) Int. Cl.: G05B 19/00, H02J 13/00

(54) **AUTOMATED SYSTEM FOR MONITORING, PROTECTING AND CONTROLLING ELECTRICAL SUBSTATION EQUIPMENT**

(30) Priority: 17.06.2011 RU 2011124595
(71) Applicant: Lysis Limited Liability Company, Moscow 115142 (RU)
(72) Inventor: DOROFEEV, Ivan Nikolaevich, Moskovskaya obl. 143905 (RU); IVANOV, Dmitry Valeryevich, Moscow 127560 (RU)
(74) Representative: Delamare, Raoul
(86) International application number: PCT/RU2012/000463
(87) International publication number: WO 2012/173525

(57) **Abstract**

The invention relates to the field of electrical engineering and can be used for monitoring, protecting and controlling operational modes of an electrical substation equipment.

The main point of the invention consists in the following: a device for monitoring, protecting, recording and controlling electrical substation equipment is implemented in the form of a cluster of servers consisting of several computers connected to form a unified system. The servers cluster is connected to a control unit of the electrical substation equipment disposed on an operator workstation. The servers cluster is connected by a separate bus to devices that execute control commands and are disposed on the electrical substation equipment, and to a remote access terminal.

## Description

The invention relates to the field of electrical engineering and can be used for monitoring, protecting and controlling operational modes of an electrical substation equipment.

It is known a system for monitoring, protecting and controlling electrical substations equipment comprising sensors for the technical parameters of the electrical substation equipment, said sensors being connected by communication lines to a control panel, which is linked to a supervisory console. (See Russian Federation Patent 2389117, published May 10, 2010, H02J3/00). A drawback of this system is the necessity of connecting a large number of communication lines to the sensors; insufficient computing capability of control panel devices caused by distribution of tasks of the system for monitoring, protecting and controlling electrical substation equipment on a large number of devices of different types. The large number of communication lines results from the fact that it was necessary to bring data regarding currents, voltages and other parameters of the electrical substation equipment to each device that is a part of the control panel where such information is necessary. With this, each sensor must have submodules for transformation of input analog information to digital form suitable for processing. And correspondingly, submodules for transformation of results of computations to the analog form of operational commands for transfer to the equipment. That results in increased complexity of a control system and its unreliability.

Also it is known an automated system for monitoring, protecting and controlling the electrical substation equipment that includes sensors for technical parameters of the electrical substation equipment, said sensors being connected to an electrical-to-optical converter ; an optical data transmission bus ; converters of an optical signal into an electrical signal ; a device for monitoring, protecting, recording and controlling electrical substation equipment. (See Russian Federation Patent 2402139, published October 20, 2010, H02J13/00). This system is selected as a prototype of the present invention.

In this system, analog communications between devices were replaced by optical digital communications. Thus, it was possible to reduce considerably the number of connections between the devices that are part of the automated system for monitoring, protecting and controlling electrical substation equipment. However, an essential drawback of this system is the fact that the number of types of intellectual devices that are performing automation tasks, and their total number as a part of the automated system for monitoring, protecting and controlling electrical substation equipment, remains invariably large, and this results in complexity and unreliability of operation throughout the system.

The technical problem of the present invention is to simplify the automated system for monitoring, protecting and controlling electrical substation equipment and improve the reliability of its operation.

This technical problem is resolved by the fact that the automated system for monitoring, protecting and controlling electrical substation equipment includes sensors for technical parameters of the electrical substation equipment, said sensors being connected to a convertor of an electrical signal into an optical signal. In addition, it comprises an optical bus for data transmission, and converters of an optical signal into an electrical signal. Also, it includes a device for monitoring, protecting, recording and controlling electrical substation equipment. This device for monitoring, protecting, recording and controlling electrical substation equipment is implemented in the form of a cluster of servers consisting of several computers connected to form a unified system. The servers cluster is connected to a control unit of the electrical substation equipment disposed on an operator workstation. Also, it is connected by a separate bus to devices that execute control commands and are disposed on the electrical substation equipment, and to a remote access terminal.

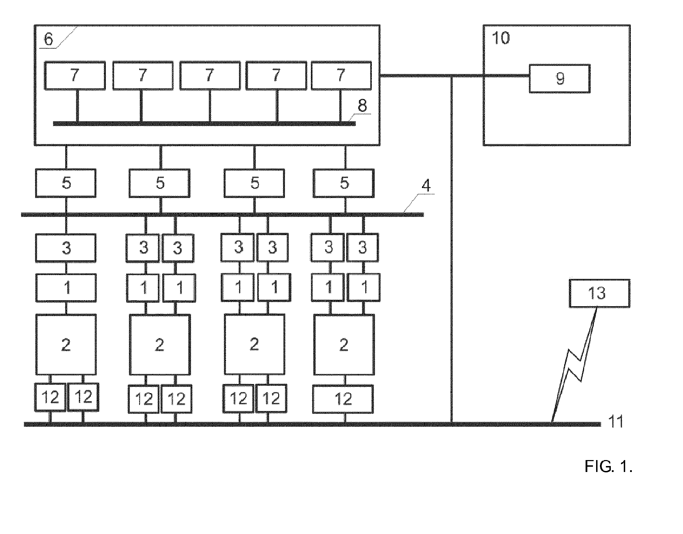

The proposed automated system for monitoring, protecting and controlling electrical substation equipment is illustrated with the help of the attached drawing. Figure 1 reflects the general layout illustrating a structure of the automated system for monitoring, protecting and controlling electrical substation equipment.

The main point of the invention consists in the following. Sensors 1 for technical parameters of an electrical substation equipment 2 are connected to electrical-to-optical converters 3. These converters are linked to an optical data transmission bus 4 on which optical-to-electrical converters 5 are also disposed, said optical-to-electrical converters are directly linked to a device 6 for monitoring, protecting, recording and controlling the electrical substation equipment. This device for monitoring, protecting, recording and controlling the electrical substation equipment is implemented in the form of a server cluster consisting of several computers 7 connected in a unified system by a cluster's internal data bus 8. The servers cluster is connected to a control unit 9 of the electrical substation equipment disposed on an operator workstation 10. The servers cluster is likewise connected by a separate bus 11 to devices 12 for executing control commands, the devices for executing control commands being disposed on the electrical substation equipment, and to a remote access terminal 13.

The sensors 1 for the electrical substation equipment are usually designed as sensors which are disposed on a transformer and which continuously measure parameters such as voltage, current, temperature of windings, oil level, indoors temperature, status of outlets, presence of gases in oil etc.

The optical data transmission bus 4 can be implemented in the form of an Ethernet network with fault-tolerant topology with special protocols applied for changeover instantly for network reconfiguration. This network is implemented on the basis of an optical data transmission medium so as to eliminate issues with electromagnetic compatibility. Interfaces of the process bus and a data exchange format are standardized and set forth in IEC 61850.

Unlike existing systems constructed on the basis of a large number of diverse devices with limited functionality and heterogeneous hardware, in this ITIP ASS is used a fault-tolerant hardware cluster of "standard" servers with a load distribution function and support for redistribution of processes at cluster node failure. The computational cluster platform consists of a group of single-type servers (the use of heterogeneous platforms is permitted but significant savings on maintenance is achieved with use of single-type hardware). Functionally, servers are subdivided into two groups: communications frontends that carry out tasks of the interaction of the ITIP ASS with peripheral equipment, and nodes of the cluster that provide the execution of the applied software. The servers-components of the cluster are integrated by means of specialized high-capacity LAN bus of the cluster carrying out the interaction function of the cluster components.

The cluster's internal data bus 8 is represented as a high-speed data transmission network designed to unify the components of the cluster into a whole. This network is manufactured on the foundation of specialized technologies based on IEEE 803.2 standards with data exchange rates up to 10 Gb/sec. This network is physically isolated from external buses with a view toward reliability and safety.

The server cluster has a software system with modular structure. The servers cluster with this software system is connected via communication lines with devices 12 that execute security and control commands and are disposed on the electrical substation equipment. This system resolves the following tasks:
- Differential protection of a line
- Complete system for multi-step protection of the line
- Differential protection of the transformer
- Differential protection of buses
- Feeder protection
- Engine protection
- Generator protection
- Ensured operation of automated emergency equipment including to prevent violation of stability, to eliminate asynchronous mode, to restrict increase in frequency, to restrict voltage increase.
- Interpretation of control commands
- Execution of timely blocking
- Recording emergency events
- Determining damage locations
- Monitoring parameters of electrical power quality
- Controlling local automated equipment
- Electrical power accounting
- Controlling information-measuring and information-computational units of the electrical substation equipment
- Monitoring and diagnostics of power equipment
- Monitoring and diagnostics of transformer and of other oil-filled equipment
- Monitoring and diagnostics of switching equipment
- etc.

Operator workstations 10 from which the electrical substation equipment is managed, are connected to the servers cluster by a dedicated network for considerations of security. All traffic, which could be intercepted, is transmitted in encrypted form.

The automated system for monitoring, protecting and controlling electrical substation equipment works as follows. Signals from the sensors 1 of the electrical substation equipment 2 arrive - via the electrical-to-optical converters 3, and the optical data transmission bus 4, and the optical-to-electrical converters 5 - at the device 6 for monitoring, protecting, recording and controlling the electrical substation equipment implementing in the form of the servers cluster. This device performs the recording, processing and analysis of these signals, such as comparison with specified parameters. As a result of the analysis of these signals, such as when there is a deviation of parameters from those specified, the control commands are formulated and travel along the bus 11 to the devices 12 which are disposed on the electrical substation equipment and which execute the control commands. The control commands may be submitted as well as from the operator's workstation in manual mode, as well as from the remote access terminal 13.

This automated system for monitoring, protecting and controlling electrical substation equipment can be repeatedly made by industry with application of mature modern technologies, and materials and processes based on modern mature technologies, and is used for monitoring, protecting and controlling electrical substation equipment.

This automated system for monitoring, protecting and controlling electrical substation equipment passed bench tests as a result of which this system showed high reliability since the cluster is a fault-tolerant architecture, making it possible to ensure execution of all algorithms even in the case of failure of several servers-nodes of the cluster. In addition, the system is much simpler than existing analogs due to a significant reduction in the number of nodes, blocks and elements, types of devices that are part of the automated system. Likewise, the system showed substantive diminution of cost of the equipment in comparison with the traditional solution; reduction of timeframes for development as a result of the decrease in laboriousness required for design, engineering, and setup; high degree of scalability; and simplicity of modernization.

This automated system for monitoring, protecting and controlling electrical substation equipment is recommended for a wide introduction in industry.

To explain the foregoing: the cluster proposed in this invention includes several different groups of servers represented by computers 7. In Figure 1 the cluster of the servers is designated by the number 6. One group of servers 7 represents communication frontends. This group of servers is adapted for interaction of the cluster 6 with the peripheral equipment of the electrical substation. A second group of servers 7 represents computers which are implemented in the form of nodes of the cluster 6. The second group is adapted for execution of the application software. The second group of servers has a modular structure. This structure comprises:
- a module for differential protection of the power line,
- a module for the complete system for multi-step protection of the power line,
- a module for differential protection of the transformer,
- a module for differential protection of buses,
- a module for feeder protection,
- a module for engine protection,
- a module for protection of the generator,
- a module to ensure operation of automated emergency equipment including to prevent violation of stability, to eliminate asynchronous mode, to restrict increase in frequency, and to restrict voltage increase.
- a module for interpretation of control commands,
- a module for execution of timely blocking,
- a module for recording emergency events,
- a module for determining damage locations,
- a module for monitoring parameters of electrical power quality,
- a module for controlling of local automated equipment,
- a module for electrical power accounting,
- a module for controlling of information-measuring and information-computational units of the electrical substation equipment,
- a module for monitoring and diagnostics of power equipment,
- a module for monitoring and diagnostics of transformer and of other oil-filled equipment,
- a module for monitoring and diagnostics of switching equipment.

A set of modules and a number of computers in which they are implemented may be different in each specific case.

Each module has a hardware and a software part. The software part of each module is universal and is adapted for any hardware.

Program parts of the modules may be installed in module hardware, as well as taken out to an individual server in the cluster of the servers.

## Claims

1. Automated system for monitoring, protecting and controlling electrical substation equipment including sensors for technical parameters of the electrical substation equipment, said sensors being connected to an electrical-to-optical converter, an optical data transmission bus, optical-to-electrical converters, a device for monitoring, protecting, recording and controlling electrical substation equipment, **characterised in that** the device for monitoring, protecting, recording and controlling electrical substation equipment is implemented in the form of a servers cluster consisting of several computers connected to form a unified system, **in that** the servers cluster is connected to a control unit for the electrical substation equipment, the control unit being disposed on an operator workstation, and is also connected by a separate bus to devices for executing control commands, the devices for executing control commands being disposed on the electrical substation equipment, and to a remote access terminal.
